# FASCICULE DE BREVET EUROPEEN

(11) **EP 3 588 308 B1**
(45) Date de publication et mention de la délivrance du brevet: **04.08.2021**
(21) Numéro de dépôt: 19181425.0
(22) Date de dépôt: 20.06.2019
(51) Int. Cl.: G06F 12/02, G06Q 20/34, G06F 9/445

(54) **CONFIGURATION D'UN DISPOSITIF ÉLECTRONIQUE**
KONFIGURATION EINER ELEKTRONISCHEN VORRICHTUNG
CONFIGURATION OF AN ELECTRONIC DEVICE

(30) Priorité: 28.06.2018 FR 1855856
(43) Date de publication de la demande: 01.01.2020
(73) Titulaire: IDEMIA France, 92400 Courbevoie (FR)
(72) Inventeur: BILLAUD, Jeremy, 92400 COURBEVOIE (FR); DAVIEAUD, Patrick, 92400 COURBEVOIE (FR)
(74) Mandataire: Cabinet Beau de Loménie

(56) Documents cités:
- EP-A1- 2 302 551
- EP-A1- 2 447 835
- FR-A1- 3 023 941
- US-A1- 2004 013 266
- US-A1- 2007 271 603

## Description

### Arrière-plan de l'invention

L'invention se situe dans le domaine de la configuration de dispositifs électroniques et porte plus particulièrement sur l'optimisation de l'espace mémoire dans des dispositifs électroniques tels que des cartes à puces, documents électroniques et terminaux, par exemple.

De façon connue, certains dispositifs électroniques nécessitent d'être configurés de façon appropriée avant leur mise en service. Cette phase préliminaire de configuration requiert généralement le chargement de codes d'instructions (ou codes exécutables) et/ou de données dans une mémoire du dispositif électronique concerné afin de rendre celui-ci fonctionnel.

Les cartes à puce, par exemple, requièrent généralement une phase de pré-personnalisation au cours de laquelle des données sont mémorisées dans une mémoire. Pour ce faire, des codes d'instructions peuvent être mémorisés dans une mémoire non volatile de la carte à puce, par exemple par le fondeur de la puce électronique de la carte. Ces codes d'instructions sont exécutés pour permettre la configuration de la carte à puce lors d'une pré-personnalisation. Cette pré-personnalisation implique la génération de données d'utilisateur dans la mémoire de la carte à puce, de façon à rendre la carte fonctionnelle.

Les données d'utilisateur mémorisées dans les dispositifs électronique lors de la pré-personnalisation peuvent varier selon le cas et peuvent être communes à un lot d'une pluralité de dispositifs électroniques. Ces données d'utilisateur, propres généralement à un opérateur d'un service associé, peuvent comprendre par exemple des applets (ou applications), des algorithmes ou encore des protocoles à mettre en œuvre par le dispositif électronique lors de son fonctionnement ultérieur.

Une fois la pré-personnalisation effectuée, une phase de personnalisation peut être réalisée afin de finaliser la configuration du dispositif électronique afin de le rendre fonctionnel, c'est-à-dire prêt pour utilisation. Au cours de cette personnalisation, des données généralement propres à un utilisateur final sont mémorisées dans le dispositif électronique (nom, prénom, code PIN, etc.).

La configuration (et notamment la pré-personnalisation) de dispositifs électroniques, tels que cartes à puce, terminaux, documents électroniques ou autres, nécessitent l'utilisation d'un espace mémoire qui n'est pas toujours optimale ou satisfaisante. Une quantité importante de codes exécutables et de données d'utilisateur doit souvent être enregistrée dans la mémoire de ces dispositifs électroniques, ce qui nécessite des ressources en mémoire importante, ce qui n'est pas toujours souhaitable, et peut s'avérer incompatible avec des contraintes de taille ou de miniaturisation.

Le document EP2302551 A1 divulgue une méthode de pré-personnalisation d'une carte à puce effectuée par un fabricant de carte à puce pour enregistrer une application dans une mémoire de la carte puce.

Il existe donc un besoin pour une solution permettant de configurer des dispositifs électroniques, tels que par exemple ceux évoqués ci-avant, en optimisant l'utilisation des ressources en mémoire dans ces dispositifs, notamment dans le cadre d'une pré-personnalisation de ces dispositifs. Un besoin existe également pour minimiser le temps de configuration nécessaire pour configurer de tels dispositifs électroniques.

### Objet et résumé de l'invention

A cet effet, la présente invention concerne un procédé de configuration comprenant :
- acquisition d'un ensemble de codes d'instructions comprenant :
   ∘ des codes d'instructions de production pour configurer un dispositif électronique de référence ; et
   ∘ des codes d'instructions fonctionnels pour configurer un dispositif électronique fonctionnel ;
- premier chargement au cours duquel les codes d'instructions de production sont chargés dans une première zone mémoire du dispositif électronique de référence, sans charger aucun code d'instructions fonctionnel ne faisant pas également partie des codes d'instructions de production, de sorte à causer la génération de données d'utilisateur dans une deuxième zone mémoire du dispositif électronique de référence par exécution des codes d'instructions de production ;
- extraction des données d'utilisateur depuis la deuxième zone mémoire du dispositif électronique de référence ;
- deuxième chargement au cours duquel les codes d'instructions fonctionnels sont chargés dans une première zone mémoire du dispositif électronique fonctionnel, sans charger aucun code d'instructions de production ne faisant pas également partie des codes d'instructions fonctionnels ; et
- troisième chargement au cours duquel les données d'utilisateur, extraites de la deuxième zone mémoire du dispositif électronique de référence, sont chargées dans une deuxième zone mémoire du dispositif électronique fonctionnel.

L'invention permet de minimiser les ressources en mémoire et le temps, nécessaires à la configuration du dispositif électronique de référence et du dispositif électronique fonctionnel, comme expliqué ultérieurement.

Selon l'invention, les codes d'instructions de production et les codes d'instructions fonctionnels sont au moins en partie distincts les uns des autres.

Selon un mode de réalisation particulier, le procédé de configuration comprend une analyse dudit ensemble de codes d'instructions pour sélectionner :
- une première partie dudit ensemble en tant que codes d'instructions de production ; et
- une deuxième partie dudit ensemble en tant que codes d'instructions fonctionnels ;
les première et deuxième partie ayant au moins une portion distincte.

Selon un mode de réalisation particulier, les codes d'instructions de production chargés dans la première zone mémoire du dispositif électronique de référence définissent au moins une fonction de configuration causant la génération des données d'utilisateur dans la deuxième zone mémoire du dispositif électronique de référence.

Selon un mode de réalisation particulier, ladite au moins une fonction de configuration cause la création, dans la deuxième zone mémoire du dispositif électronique de référence, d'une structure de répertoires et de fichiers dans laquelle sont stockées les données d'utilisateur.

Selon un mode de réalisation particulier, l'extraction des données d'utilisateur est réalisée par le dispositif de configuration en causant l'exécution d'une fonction d'extraction définie dans les codes d'instructions de production stockées dans la première zone mémoire du dispositif électronique de référence.

Selon un mode de réalisation particulier, le troisième chargement, des données d'utilisateur dans la deuxième zone mémoire du dispositif électronique fonctionnel, est réalisé sans que le dispositif électronique fonctionnel n'interprète lesdites données d'utilisateur.

Selon un mode de réalisation particulier, le dispositif électronique de référence et le dispositif électronique fonctionnel sont des cartes à puce.

Dans un mode particulier de réalisation, les différentes étapes du procédé de configuration sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un dispositif de configuration (ou système de configuration) ou plus généralement dans un ordinateur, ce programme comportant des instructions adaptées à la mise en œuvre des étapes d'un procédé de configuration tel que défini dans ce document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que défini dans ce document.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne également un dispositif de configuration correspondant, c'est-à-dire un tel dispositif apte à mettre en œuvre le procédé de configuration tel que défini dans ce document.

En particulier, l'invention concerne un dispositif de configuration comprenant :
- un module d'acquisition d'un ensemble de codes d'instructions comprenant :
   ∘ des codes d'instructions de production pour configurer un dispositif électronique de référence ; et
   ∘ des codes d'instructions fonctionnels pour configurer un dispositif électronique fonctionnel ;
- un premier module de chargement pour charger les codes d'instructions de production dans une première zone mémoire du dispositif électronique de référence, sans charger aucun code d'instructions fonctionnel ne faisant pas également partie des codes d'instructions de production, les codes d'instructions de production étant configurés pour causer la génération de données d'utilisateur dans une deuxième zone mémoire du dispositif électronique de référence par exécution desdits codes d'instructions de production ;
- un module d'extraction pour extraire les données d'utilisateur depuis la deuxième zone mémoire du dispositif électronique de référence ;
- un deuxième module de chargement pour charger les codes d'instructions fonctionnels dans une première zone mémoire du dispositif électronique fonctionnel, sans charger aucun code d'instructions de production ne faisant pas également partie des codes d'instructions fonctionnels ; et
- un troisième module de chargement pour charger les données d'utilisateur, extraites par le module d'extraction, dans une deuxième zone mémoire du dispositif électronique fonctionnel.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel peut être exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

A noter que les différents modes de réalisation mentionnés ci-avant en relation avec le procédé de configuration de l'invention ainsi que les avantages associés s'appliquent de façon analogue au dispositif de configuration de l'invention. Pour chaque étape du procédé de configuration, le dispositif électronique de l'invention peut comprendre un module correspondant configuré pour réaliser ladite étape.

L'invention concerne également un système comprenant un dispositif de configuration tel que défini dans ce document, ainsi qu'un dispositif électronique de référence et un dispositif électronique fonctionnel.

Selon un mode de réalisation particulier, le dispositif électronique de référence comprend au moins une mémoire comportant les première et deuxième zones mémoires du dispositif électronique de référence.

Selon un mode de réalisation particulier, le dispositif électronique fonctionnel comprend au moins une mémoire comportant les première et deuxième zones mémoires du dispositif électronique fonctionnel.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement la structure d'un système comprenant un dispositif de configuration, un dispositif électronique de référence et un dispositif électronique fonctionnel, conformément à un mode de réalisation particulier de l'invention ;
- la figure 2 représente schématiquement les modules fonctionnels mis en œuvre par un dispositif de configuration, selon un mode de réalisation particulier de l'invention ;
- la figure 3 est un diagramme représentant schématiquement les étapes d'un procédé de configuration mis en œuvre par un dispositif de configuration, en coopération avec un dispositif électronique de référence et un dispositif électronique fonctionnel, conformément à un mode de réalisation particulier de l'invention ;
- la figure 4 représente schématiquement l'état de l'espace mémoire d'un dispositif électronique de référence et d'un dispositif électronique fonctionnel, au cours du déroulement d'un procédé de configuration, conformément à un mode de réalisation particulier de l'invention ; et
- la figure 5 est un diagramme représentant schématiquement les étapes d'un procédé de configuration, selon une variante du procédé représenté en figure 3.

### Description détaillée de plusieurs modes de réalisation

L'invention propose d'optimiser la configuration d'un dispositif électronique, en assurant notamment une meilleure gestion de l'espace mémoire dans un tel dispositif. L'invention permet en particulier de rendre plus efficace la pré-personnalisation d'un ou d'une pluralité de dispositifs électroniques.

A cette fin, l'invention met en œuvre un procédé de configuration comportant une première configuration d'un premier dispositif électronique - dit dispositif électronique de référence - puis une deuxième configuration d'un ou d'une pluralité de deuxièmes dispositifs électroniques - dits aussi dispositifs électroniques fonctionnels - à partir de données d'utilisateur générées dans la mémoire du dispositif électronique de référence lors de la première configuration. Le dispositif électronique de référence sert de modèle dans le sens où les données d'utilisateur qu'il génère lors de sa configuration sont ensuite utilisées pour configurer le ou les dispositifs électroniques fonctionnels. Comme expliqué ultérieurement, l'utilisation d'un dispositif électronique de référence pour configurer d'autres dispositifs électroniques permet de faciliter la configuration de ces derniers.

Un principe de l'invention réside dans une utilisation sélective des codes d'instructions (ou codes exécutables) mis en jeu, en différentiant les codes d'instructions dit « de production » d'une part, et les codes d'instructions dit « fonctionnels », d'autre part. Comme expliqué en détail ultérieurement, seuls les codes d'instructions de production, c'est-à-dire ceux utiles ou nécessaires à la configuration du dispositif électronique de référence, sont chargés dans le dispositif électronique de référence. Inversement, seuls les codes d'instructions fonctionnels, c'est-à-dire ceux utiles ou nécessaire à la configuration du dispositif électronique fonctionnel, sont chargés dans le dispositif électronique fonctionnel. Autrement dit, seuls les codes d'instructions réellement utiles sont chargés dans chacun des dispositifs électroniques de sorte à minimiser l'espace mémoire nécessaire dans ceux-ci pour permettre une configuration rapide et efficace du ou des dispositifs électroniques fonctionnels.

L'invention concerne notamment un procédé de configuration comprenant : l'acquisition d'un ensemble de codes d'instructions comprenant des codes d'instructions de production pour configurer un dispositif électronique de référence et des codes d'instructions fonctionnels pour configurer un dispositif électronique fonctionnel ; un premier chargement au cours duquel seuls les codes d'instructions de production sont chargés dans le dispositif électronique de référence, de sorte à causer la génération de données d'utilisateur dans une zone mémoire du dispositif électronique de référence par exécution des codes d'instructions de production ; l'extraction des données d'utilisateur stockées dans le dispositif électronique de référence ; un deuxième chargement au cours duquel seuls les codes d'instructions fonctionnels sont chargés dans le dispositif électronique fonctionnel ; et un troisième chargement au cours duquel les données d'utilisateur, extraites du dispositif électronique de référence, sont chargées dans le dispositif électronique fonctionnel.

L'invention concerne également le dispositif de configuration correspondant.

Comme indiqué par la suite, certains codes d'instructions peuvent être à la fois des codes d'instructions de production et des codes d'instructions fonctionnels, bien que cela ne soit pas obligatoire. Toutefois, les codes d'instructions fonctionnels sont au moins en partie distincts des codes d'instructions de production, et inversement.

On entend dans ce document par « codes d'instructions » (appelés aussi « codes exécutables »), des instructions définies dans un quelconque langage de programmation approprié, ces instructions étant exécutables par un dispositif hôte (à savoir le dispositif électronique de référence et/ou le dispositif électronique fonctionnel) pour réaliser au moins une fonction prédéterminée. Ces codes d'instructions peuvent être sous forme de code source, code objet, ou dans n'importe quelle autre forme souhaitable.

Dans ce document, on décrit des exemples de mise en œuvre de l'invention dans le cadre de la pré-personnalisation de dispositifs électroniques. On comprendra toutefois que l'invention s'applique plus généralement à une quelconque configuration d'un dispositif électronique désigné sous l'appellation dispositif électronique fonctionnel.

Selon les exemples de mises en œuvre de l'invention décrits dans ce document, un dispositif électronique fonctionnel est configuré à partir de données d'utilisateur préalablement générées dans un dispositif électronique de référence, distinct du dispositif électronique fonctionnel. On comprend toutefois que l'invention peut s'appliquer de la même manière pour configurer une pluralité de dispositifs électroniques fonctionnels à partir des données d'utilisateur ainsi générées dans un même dispositif électronique de référence distinct.

Un dispositif électronique de référence au sens de l'invention est un dispositif qui génère des données d'utilisateur lors d'une première configuration et qui sert de référence (ou modèle) dans la mesure où les données d'utilisateur ainsi générées peuvent ensuite être utilisées, lors d'une deuxième configuration, pour configurer un dispositif électronique fonctionnel distinct du dispositif électronique de référence.

Un dispositif électronique fonctionnel au sens de l'invention est un dispositif qui, une fois configuré (ou pré-personnalisé), est fonctionnel (c'est-à-dire qu'il est apte à fonctionner et à être utilisé par un utilisateur par exemple pour réaliser au moins une fonction prédéterminée) ou destiné à l'être, éventuellement après une ou des étapes de configuration ultérieures. Ainsi, une fois le procédé de configuration de l'invention effectué, le dispositif électronique fonctionnel peut se trouver dans un état intermédiaire lui permettant de devenir totalement fonctionnel seulement après qu'une ou des étapes de configuration ultérieures aient été réalisées. Un dispositif électronique fonctionnel peut ainsi être pré-personnalisé au cours du procédé de l'invention et requérir, par exemple, une phase de personnalisation avant sa mise en service.

Comme indiqué par la suite, l'invention s'applique généralement à un quelconque dispositif électronique nécessitant une phase de configuration, ou de pré-personnalisation, avant sa mise en service, c'est-à-dire avant d'être fonctionnel ou opérationnel. L'invention s'applique notamment aux dispositifs électroniques tels que cartes à puce (ou cartes à microcircuit), terminaux (tels que les terminaux de paiement par exemple), documents électroniques (tels que les documents électroniques identitaires, par exemple : passeports électroniques, cartes d'identité électroniques ou autres), ou encore aux éléments sécurisés (ES) tel que ceux utilisés dans le domaine des télécommunications mobiles pour authentifier un terminal mobile auprès d'un réseau de communication (par exemple une carte SIM, eUICC ou autres). Certains exemples seront décrits ci-après.

D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

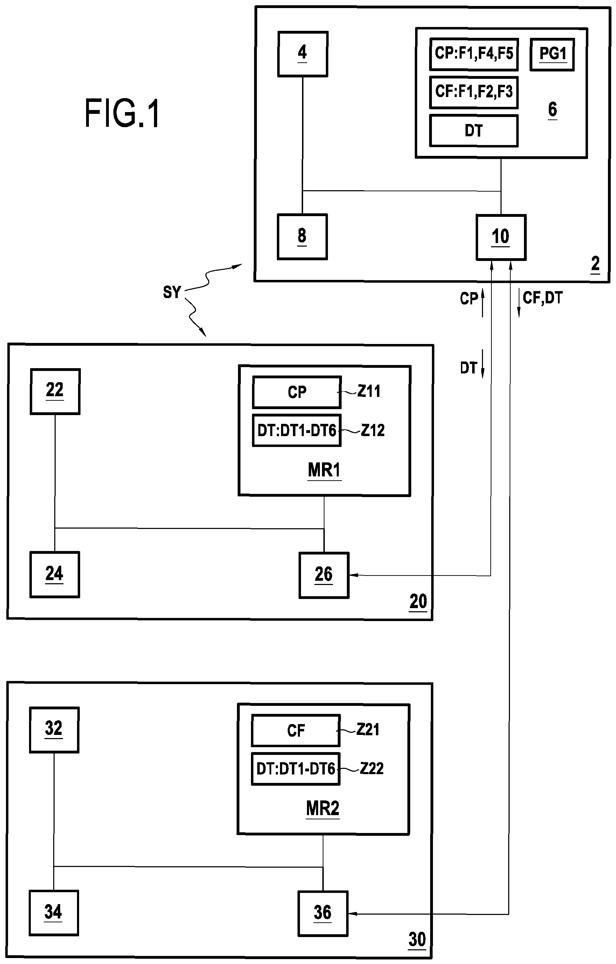

La **figure 1** représente, de manière schématique, la structure d'un système SY comprenant : un dispositif de configuration (ou système de configuration) 2, un premier dispositif électronique 20 dit « dispositif électronique de référence », et un deuxième dispositif électronique 30 dit « dispositif électronique fonctionnel ».

Dans cet exemple, le dispositif de configuration 2 comprend un processeur 4, une mémoire non volatile réinscriptible 6, une mémoire volatile 8 (RAM) et une interface de communication 10.

Le dispositif de configuration 2 est apte à configurer le dispositif électronique de référence 20 (appelé aussi dispositif électronique maître) et le dispositif électronique fonctionnel 30 (appelé aussi dispositif électronique esclave).

Le dispositif de configuration 2 peut prendre toute forme appropriée (serveur, ordinateur, terminal quelconque...). Dans un exemple particulier, le dispositif de configuration 2 peut être un système de configuration comportant au moins deux dispositifs distincts pour réaliser les étapes du procédé de configuration, comme décrit ci-après. En particulier, il peut s'agir d'un système de configuration comportant un premier dispositif pour coopérer avec le dispositif électronique de référence 20 (première configuration) et un deuxième dispositif pour coopérer avec le dispositif électronique fonctionnel 30 (deuxième configuration).

Le dispositif de configuration 2 utilise son interface de communication 10 pour communiquer avec les dispositifs 20 et 30. L'interface de communication 10 est configurée pour établir un quelconque type de lien de communication, filaire ou sans fil, avec les dispositifs 20 et 30.

La mémoire 6 est une mémoire non volatile réinscriptible (de type Flash ou EEPROM, par exemple), cette mémoire constituant un support d'enregistrement (ou support d'informations) conforme à un mode de réalisation particulier, lisible par le dispositif de configuration 2, et sur lequel est enregistré un programme d'ordinateur PG1 conforme à un mode de réalisation particulier. Ce programme d'ordinateur PG1 comporte des instructions pour l'exécution des étapes d'un procédé de configuration selon un mode de réalisation particulier. Des exemples de mises en œuvre de ce procédé sont décrits ultérieurement.

Dans cet exemple, le dispositif de configuration 2 utilise sa mémoire 6 pour stocker des codes d'instructions, à savoir des codes d'instructions de production CP ainsi que des codes d'instructions fonctionnels CF.

Comme déjà indiqué, les codes d'instructions (ou codes exécutables) mis en jeu dans l'invention sont des instructions définies dans un quelconque langage de programmation approprié, ces instructions étant exécutables par un dispositif hôte (à savoir le dispositif électronique de référence 20 et/ou le dispositif électronique fonctionnel 30 dans cet exemple) pour réaliser au moins une fonction prédéterminée. Ces codes d'instructions peuvent être sous forme de code source, code objet, ou dans n'importe quelle autre forme souhaitable. Dans ce document, les codes d'instructions de production ainsi que les codes d'instructions fonctionnels constituent chacun module logiciel, et peuvent chacun comprendre au moins une instruction et/ou définir au moins fonction prédéterminée.

Les codes d'instructions de production CP sont destinés ou configurés pour être exécutés par le dispositif électronique de référence 20, afin que ce dernier se configure et génère en particulier des données d'utilisateur DT, comme expliqué ci-après. Autrement dit, les codes d'instructions de production CP sont utiles ou nécessaires à la pré-personnalisation (ou configuration) du dispositif électronique de référence 20. Plus particulièrement, les codes d'instructions de production CP sont configurés pour causer la génération de données d'utilisateur DT dans une zone mémoire (notée ci-après Z12 ; cf. **figure 1****)** du dispositif électronique de référence 20 par exécution desdits codes d'instructions de production CP.

Le dispositif électronique de référence 20 n'est pas destiné à être fonctionnel et n'a donc pas pour destination d'être utilisable par un utilisateur, mais permet de faciliter la pré-personnalisation (ou configuration) du dispositif électronique fonctionnel 30, comme expliqué ci-après.

Les codes d'instructions fonctionnels CF sont exécutables pour faire fonctionner le dispositif électronique fonctionnel 30 en coopération avec les données d'utilisateur DT. Cela signifie que les codes d'instructions fonctionnels CF sont destinés ou configurés pour être exécutés par le dispositif électronique fonctionnel 30, afin que ce dernier se configure pour devenir fonctionnel, de sorte qu'il soit utilisable pour une utilisation prédéterminée, comme expliqué ci-après. Autrement dit, les codes d'instructions fonctionnels CF sont utiles ou nécessaires à la pré-personnalisation (ou configuration) du dispositif électronique fonctionnel 30.

A noter que des codes d'instructions fonctionnels CF peuvent également être ou faire partie des codes d'instructions de production CP (bien que cela ne soit pas obligatoire), et inversement. Toutefois, au moins une partie des codes d'instructions fonctionnels CF est distincte des codes d'instructions de production CP, et inversement.

Dans l'exemple envisagé ici (**figure 1**), les codes d'instructions de production CP comportent les codes d'instructions F1, F4 et F5, chacun de ces codes d'instructions constituant un module logiciel définissant au moins une fonction. De plus, les codes d'instructions fonctionnels CF comportent dans cet exemple les codes d'instructions F1, F2 et F3, chacun de ces codes d'instructions constituant un module logiciel définissant au moins une fonction. D'autres implémentations sont toutefois possibles.

Aussi, dans cet exemple, le code d'instructions F1 constitue à la fois un code d'instructions de production CP et un code d'instructions fonctionnel CF, ce qui signifie qu'il est nécessaire ou utile pour configurer à la fois le dispositif électronique de référence 20 et le dispositif électronique fonctionnel 30. Le code d'instructions F1 comprend par exemple un système d'exploitation (OS) exécutable par le dispositif électronique de référence 20 et par le dispositif électronique fonctionnel 30. Le code d'instructions F1 peut éventuellement comprendre au moins un pilote (ou « driver » en anglais) exécutable par le dispositif électronique de référence 20 et par le dispositif électronique fonctionnel 30.

En revanche, dans cet exemple, les codes d'instructions F2 et F3 sont exclusivement des codes d'instructions fonctionnels dans la mesure où ils ne sont pas configurés pour être exécutés lors de la configuration du dispositif électronique de référence 20. De même, les codes d'instructions de production F4 et F5 sont exclusivement des codes d'instructions de production dans la mesure où ils ne sont pas configurés pour être exécutés lors de la configuration du dispositif électronique fonctionnel 30.

Comme représenté en **figure 1****,** la mémoire non volatile 6 est également destinée à stocker les données d'utilisateur DT précitées.

Par ailleurs, les dispositifs électroniques 20 et 30 peuvent prendre diverses formes selon le cas d'espèce. Ces dispositifs électroniques peuvent être, par exemple, l'un parmi les types suivants :
- une carte à puce, de type ISO 7816 par exemple (il peut s'agir par exemple d'une carte bancaire, de type EMV ou autre) ;
- un terminal, tel qu'un terminal bancaire ou autre (il peut s'agir par exemple d'un terminal de paiement, de type EMV ou autre) ;
- un document électronique identitaire, tel qu'un passeport électronique, une carte d'identité électronique, un permis de conduire électronique etc. ;
- un élément sécurisé (ES), configuré par exemple pour authentifier un terminal mobile auprès d'un réseau de communication (il peut s'agit d'une carte SIM ou UICC (pour « *Universal Integrated Circuit Card»),* d'un module eUICC (pour « *embedded Universal Integrated Circuit Card»)* ou autre) ;
- un objet connecté (IoT).

Dans un exemple particulier, les dispositifs électroniques 20 et 30 sont du même type, par exemple l'un parmi ceux énoncés ci-avant. Dans un exemple particulier, les dispositifs électroniques 20 et 30 présentent une structure identique.

Selon un exemple particulier, les dispositifs électroniques 20 et 30 sont tous les deux une carte à puce, ou tous les deux un terminal, ou encore tous les deux un document électronique.

Plus particulièrement, comme représenté en **figure 1****,** le dispositif électronique de référence 20 comprend dans cet exemple un processeur 22, une mémoire non volatile réinscriptible MR1, une mémoire volatile 24 (RAM) et une interface de communication 26.

Le dispositif électronique de référence 20 est apte à communiquer avec le dispositif de configuration 2 en utilisant son interface de communication 26.

La mémoire MR1 comprend dans cet exemple deux zones mémoire distinctes notées Z11 et Z12, ces zones étant destinées à stocker respectivement les codes d'instructions de production CP fournis par le dispositif de configuration 2 et les données d'utilisateur DT générées par le dispositif électronique de référence 20 lui-même lors de sa pré-personnalisation, comme expliqué ci-après.

On suppose dans cet exemple que les données d'utilisateur DT (ou données de personnalisation) comportent les données DT1 à DT6. Ces données d'utilisateur DT peuvent être propres à un fabricant ou à un opérateur d'un service associé, tel qu'un service bancaire ou un service de télécommunications mobiles, par exemple.

Les données d'utilisateur DT peuvent comprendre par exemple au moins l'un parmi :
- au moins une applet (ou applications), de type bancaire (applet VISA™ de paiement, etc.) ou de télécommunications mobiles par exemple ;
- au moins un algorithme, par exemple un algorithme de chiffrement (algorithme RSA, EAC, etc.) ;
- au moins un protocole de communication ;
- au moins un protocole d'authentification ;
- des données de paramétrage, telles que des données définissant la vitesse de fonctionnement du processeur 32, ...

Par ailleurs, on suppose dans cet exemple que le dispositif électronique fonctionnel 30 présente une structure identique à celle du dispositif électronique de référence 20. Plus particulièrement, comme représenté en **figure 1****,** le dispositif électronique fonctionnel 30 comprend dans cet exemple un processeur 32, une mémoire non volatile réinscriptible MR2, une mémoire volatile 34 (RAM) et une interface de communication 36.

Le dispositif électronique fonctionnel 30 est apte à communiquer avec le dispositif de configuration 2 en utilisant son interface de communication 36.

La mémoire MR2 comprend dans cet exemple deux zones mémoire distinctes notées Z21 et Z22, ces zones étant destinées à stocker respectivement les codes d'instructions fonctionnels CF fournis par le dispositif de configuration 2 et les données d'utilisateur DT (DT1-DT6) extraites par le dispositif 2 depuis la zone mémoire Z12 du dispositif électronique de référence 20.

A noter également que le dispositif de configuration 2 représenté en **figure 1** ne constitue qu'un exemple de réalisation, d'autres mises en œuvre étant possibles dans le cadre de l'invention. L'homme du métier comprendra en particulier que certains éléments du dispositif de configuration 2 ne sont décrits ici que pour faciliter la compréhension de l'invention, ces éléments n'étant pas nécessaires pour mettre en œuvre l'invention.

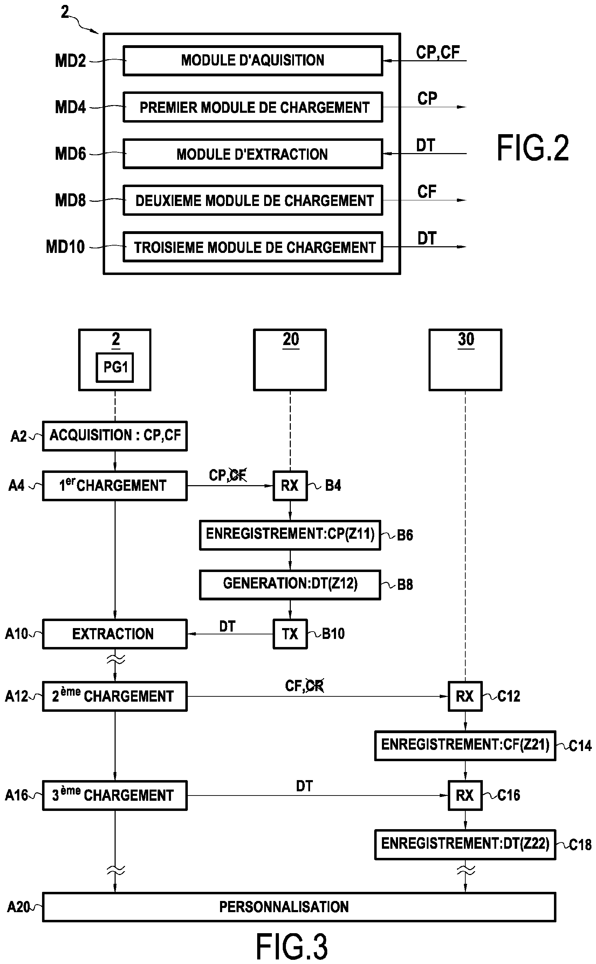

Comme représenté en **figure 2****,** le processeur 4 du dispositif de configuration 2, piloté par le programme d'ordinateur PG1, met en œuvre dans cet exemple un certain nombre de modules, à savoir : un module d'acquisition MD2, un premier module de chargement MD4, un module d'extraction MD6, un deuxième module de chargement MD8 et un troisième module de chargement MD10.

Le module d'acquisition MD2 est configuré pour acquérir un ensemble de codes d'instructions comprenant des codes d'instructions de production CP pour configurer le dispositif électronique de référence 20 et des codes d'instructions fonctionnels CF pour configurer le dispositif électronique fonctionnel 30. Le module d'acquisition MD2 peut recevoir ces codes d'instructions ou générer lui-même selon le cas.

Le premier module de chargement MD4 est configuré pour charger les codes d'instructions de production CP dans la première zone mémoire Z11 du dispositif électronique de référence 20, sans charger aucun code d'instructions fonctionnel CF ne faisant pas également partie des codes d'instructions de production CP (c.-à-d. sans charger aucun code d'instructions fonctionnel CF distinct des, ou ne correspondant pas également aux, codes d'instructions de production CP). Comme déjà indiqué, les codes d'instructions de production CP sont configurés pour causer la génération des données d'utilisateur DT dans la deuxième zone mémoire Z12 du dispositif électronique de référence 20 par exécution desdits codes d'instructions de production.

Autrement dit, le premier module de chargement MD4 est configuré pour charger seulement les codes d'instructions de production CP (F1, F4 et F5 dans cet exemple), y compris - le cas échéant - le ou les codes d'instructions de production qui correspondent également à des codes d'instructions fonctionnels CF (F1 dans cet exemple).

Pour opérer ce premier chargement, le premier module de chargement MD4 est par exemple configuré pour envoyer au dispositif électronique de référence 20 une commande en écriture spécifiant les codes d'instructions de production CP à charger. Selon un exemple particulier, le premier module de chargement MD4 est en outre configuré pour envoyer une commande d'exécution au dispositif électronique de référence 20 pour déclencher l'exécution par ce dernier des codes d'instructions de production CP stockés dans sa zone mémoire Z11.

Le module d'extraction MD6 est configuré pour extraire les données d'utilisateur DT depuis la deuxième zone mémoire Z12 du dispositif électronique de référence 20. Pour ce faire, le module d'extraction MD6 peut par exemple causer l'envoi d'une commande au dispositif électronique de référence 20 pour déclencher la lecture de ces données d'utilisateur DT. Les données DT ainsi lues dans la mémoire du dispositif électronique de référence 20 constituent ce que l'on appelle communément le « DUMP », c'est-à-dire un ensemble de données d'utilisateur destiné à être recopié dans la mémoire du dispositif électronique fonctionnel pour configurer celui-ci.

Le deuxième module de chargement MD8 est configuré pour charger les codes d'instructions fonctionnels CF dans une première zone mémoire Z21 du dispositif électronique fonctionnel 30, sans charger aucun code d'instructions de production CP ne faisant pas également partie des codes d'instructions fonctionnels CF (c.-à-d. sans charger aucun code d'instructions de production CP distinct des, ou ne correspondant pas également aux, codes d'instructions fonctionnels CF). Pour rappel, les codes d'instructions fonctionnels CF sont exécutables pour faire fonctionner le dispositif électronique fonctionnel 30 en coopération avec les données d'utilisateur DT.

Autrement dit, le deuxième module de chargement MD8 est configuré pour charger seulement les codes d'instructions fonctionnels CF (F1, F2 et F3 dans cet exemple), y compris - le cas échéant - le ou les codes d'instructions fonctionnels qui correspondent également à des codes d'instructions de production CP (F1 dans cet exemple).

Pour opérer ce deuxième chargement, le deuxième module de chargement MD8 est par exemple configuré pour envoyer au dispositif électronique fonctionnel 30 une commande en écriture spécifiant les codes d'instructions fonctionnel CF à charger.

Le troisième module de chargement MD10 est configuré pour charger les données d'utilisateur DT, extraites par le module d'extraction MD6, dans la deuxième zone mémoire Z22 du dispositif électronique fonctionnel 30. Comme indiqué par la suite, ces données d'utilisateur DT sont écrites dans la zone mémoire Z22 du dispositif électronique fonctionnel 30 sans que ce dernier ne les interprète. Ces données d'utilisateur DT ne sont pas générées par le dispositif électronique fonctionnel 30 en exécutant des codes d'instructions mais simplement enregistrées en réponse à une commande d'écriture envoyée par le troisième module de chargement MD10. L'écriture d'une image (ou copie) des données d'utilisateur DT (DUMP) dans la mémoire MR2 du dispositif électronique fonctionnel 30 permet d'accélérer sensiblement la configuration dudit dispositif électronique fonctionnel 30.

Le fonctionnement et la configuration des modules MD2-MD10 du dispositif de configuration 2 apparaîtront plus précisément dans les exemples de réalisation décrits ci-après. A noter que les modules MD2-MD10 tels que représentés en **figure 2** ne représentent qu'un exemple de mise en œuvre non limitatif de l'invention.

Un procédé de configuration conforme à un mode de réalisation particulier de l'invention est à présent décrit en référence aux **figures 3-4****.** Plus précisément, le dispositif de configuration 2, tel que décrit ci-avant en référence aux **figures 1-2****,** met en œuvre un procédé de configuration en exécutant le programme d'ordinateur PG1, selon un mode de réalisation particulier.

On considère que le dispositif de configuration 2 configure le dispositif électronique de référence 20 puis le dispositif électronique fonctionnel 30, selon une mise en œuvre particulière du procédé de configuration de l'invention.

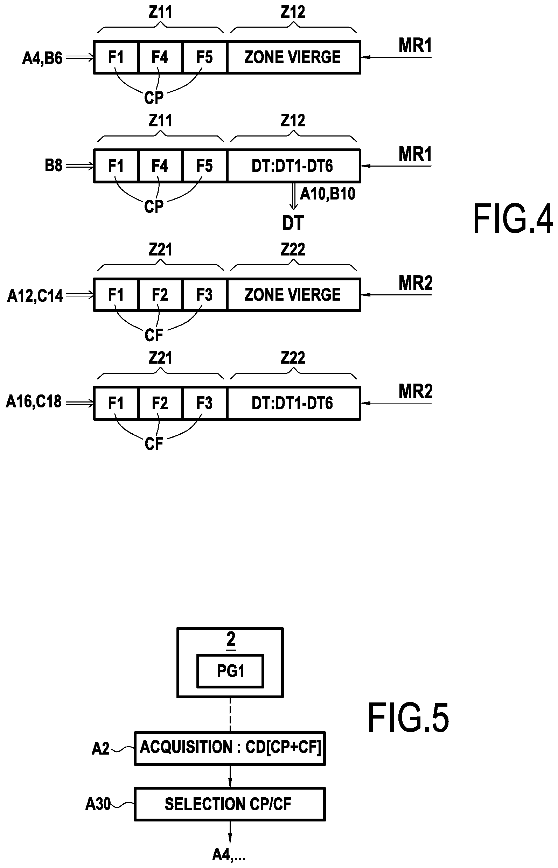

La **figure 3** représentent les opérations réalisées respectivement par le dispositif de configuration 2, par le dispositif électronique de référence 20 et par le dispositif électronique fonctionnel 30. La **figure 4** représente schématiquement l'état de la mémoire du dispositif électronique de référence 20 et du dispositif électronique fonctionnel 30, au cours du déroulement du procédé de configuration par le système SY.

Au cours d'une étape A2 d'acquisition, le dispositif de configuration 2 fait l'acquisition d'un ensemble de codes d'instructions (ou codes exécutables) comprenant des codes d'instructions de production CP pour configurer le dispositif électronique de référence 20 et des codes d'instructions fonctionnels CF pour configurer le dispositif électronique fonctionnel 30. Comme représenté en **figure 1** et décrit précédemment, on suppose dans cet exemple que les codes d'instructions de production CP comprennent les codes d'instructions F1, F4 et F5 et que les codes d'instructions fonctionnels CF comprennent les codes d'instructions F1, F2 et F3.

A noter que le dispositif de configuration 2 peut acquérir ensemble ou séparément, et selon un ordre quelconque, les codes d'instructions de production CP et les codes d'instructions fonctionnels CF.

Comme déjà indiqué, chaque code d'instructions de production CP constitue un module logiciel exécutable par le dispositif électronique de référence 20. De même, chaque code d'instructions fonctionnel constitue un module logiciel exécutable par le dispositif électronique fonctionnel 30.

L'acquisition A2 peut se produire de diverses manières. Le dispositif de configuration 2 peut notamment recevoir tout ou partie des codes d'instructions CP et CF ou générer ceux-ci selon un quelconque procédé approprié. Un exemple de mise en œuvre est décrit ultérieurement en référence à la **figure 5****.**

Au cours d'un premier chargement A4, le dispositif de configuration 2 charge (écrit) les codes d'instructions de production CP dans la première zone mémoire Z11 du dispositif électronique de référence 20, sans charger aucun code d'instructions fonctionnel CF ne faisant pas également partie des codes d'instructions de production CP (c.-à-d. sans charger aucun code d'instructions fonctionnel CF distinct des, ou ne correspondant pas également aux, codes d'instructions de production CP), de sorte à causer la génération de données d'utilisateur DT dans la deuxième zone mémoire Z12 du dispositif électronique de référence 20 par exécution des codes d'instructions de production CP.

Autrement dit, lors du premier chargement A2, le dispositif de configuration 2 charge seulement les codes d'instructions de production CP (F1, F4 et F5 dans cet exemple), y compris le code d'instructions F1 qui fait également partie des codes d'instructions fonctionnels CF. En revanche, aucun code d'instructions fonctionnel (F2, F3) ne correspondant pas également à un code d'instructions de production n'est chargé en A2 dans le dispositif électronique de référence 20.

Pour ce faire, le dispositif de configuration 2 envoie (A4) les codes d'instructions de production CP que le dispositif électronique de référence 20 reçoit en B4 **(****figure 3****).** Le dispositif de configuration 2 envoie (A4) par exemple au dispositif électronique de référence 20 une commande d'écriture spécifiant les codes d'instructions de production à écrire dans la mémoire MR1.

Au cours d'une étape B6 d'enregistrement, le dispositif électronique de référence 20 enregistre les codes d'instructions de production CP reçus dans sa première zone mémoire Z11.

Le dispositif électronique de référence 20 génère (B8) ensuite les données d'utilisateur DT dans sa deuxième zone mémoire Z12 par exécution des codes d'instructions de production CP. Le dispositif électronique de référence 20 exécute (B8) par exemple le code d'instructions de production F4 qui définit au moins une fonction de configuration exécutable pour générer des données d'utilisateur. Lors de cette étape B8 de génération, cette fonction de configuration F4 génère par exemple, dans la deuxième zone mémoire Z12 du dispositif électronique de référence 20, une structure de répertoires et de fichiers dans laquelle sont stockées les données d'utilisateur DT.

La génération B8 sollicite donc les ressources du dispositif électronique de référence 20 dans la mesure notamment où son processeur 22 doit exécuter le code d'instructions de production F4, ce qui peut nécessiter un temps de traitement plus ou moins long pour générer les données d'utilisateur DT. La génération B8 des données DT est pilotée par le dispositif de configuration 2. Autrement dit, le dispositif électronique de référence 20 génère des données DT en réponse à au moins une commande envoyée par le dispositif de configuration 2.

On considère dans cet exemple que les données d'utilisateur DT ainsi générées comportent les données DT1 à DT6, comme déjà décrit précédemment **(****figure 1****).**

Selon un exemple particulier, le dispositif de configuration 2 envoie une commande d'exécution au dispositif électronique de référence 20 pour déclencher l'exécution par ce dernier des codes d'instructions de production CP stockés dans sa zone mémoire Z11.

A l'issue de l'étape B8 de génération, le dispositif électronique de référence 20 est donc configuré selon les codes d'instructions de production CP et contient en particulier dans sa deuxième zone mémoire Z12 les données d'utilisateur DT qui peuvent avantageusement servir pour configurer le dispositif électronique fonctionnel 30.

Ainsi, au cours d'une étape d'extraction A10 **(****figures 3-4****),** le dispositif de configuration 2 extrait, depuis la deuxième zone mémoire Z12 du dispositif électronique de référence 20, les données d'utilisateur DT (DUMP). Pour ce faire, le dispositif électronique de référence 20 envoie (B10) les données d'utilisateur DT au dispositif de configuration 2, éventuellement en réponse à une commande d'extraction envoyée au préalable par le dispositif de configuration 2. Cette commande d'extraction permet de déclencher l'exécution de la fonction d'extraction permettant l'extraction A10 des données d'utilisateur DT.

Dans cet exemple, le dispositif électronique de référence 20 exécute (B10) le code d'instructions de production F5 qui définit une fonction d'extraction exécutable pour réaliser l'extraction des données d'utilisateur DT depuis sa zone mémoire Z12.

Les codes d'instructions de production sont ainsi exécutables pour permettre la génération B8 des données d'utilisateur DT dans la deuxième zone mémoire Z12 du dispositif électronique de référence 20, et pour permettre l'extraction A10/B10 des données d'utilisateur DT depuis cette deuxième zone mémoire Z12.

L'extraction A10 permet au dispositif de configuration 2 d'acquérir une copie (ou image) des données d'utilisateur DT stockées dans la deuxième zone mémoire Z12 du dispositif électronique de référence 20.

Après achèvement de l'étape A10 d'extraction, le dispositif de configuration 2 procède à la configuration (pré-personnalisation) du dispositif électronique fonctionnel 30. Pour ce faire, le dispositif de configuration 2 réalise les étapes A12 et A16 décrites ci-après.

Au cours d'un deuxième chargement A12, le dispositif de configuration 2 charge (écrit) les codes d'instructions fonctionnels CF dans la première zone mémoire Z21 du dispositif électronique fonctionnel 30, sans charger aucun code d'instructions de production CP ne faisant pas également partie des codes d'instructions fonctionnels CF (c.-à-d. sans charger aucun code d'instructions de production CP distinct des, ou ne correspondant pas également aux, codes d'instructions fonctionnels CF).

Autrement dit, lors du deuxième chargement A12, le dispositif de configuration 2 charge seulement les codes d'instructions fonctionnels CF (F1, F2 et F3 dans cet exemple), y compris le code d'instructions F1 qui fait également partie des codes d'instructions de production CP. En revanche, aucun code d'instructions de production (F4, F5) ne correspondant pas également à un code d'instructions fonctionnel n'est chargé en A12 dans le dispositif électronique fonctionnel 30.

Pour ce faire, le dispositif de configuration 2 envoie (A12) les codes d'instructions fonctionnels CF que le dispositif électronique fonctionnel 30 reçoit en C12 **(****figure 3****).** Le dispositif de configuration 2 envoie (A12) par exemple au dispositif électronique fonctionnel 30 une commande d'écriture spécifiant les codes d'instructions fonctionnels CF à écrire dans la mémoire MR2.

En réponse au deuxième chargement A12, le dispositif électronique fonctionnel 30 enregistre (C14), dans sa première zone mémoire Z21, les codes d'instructions fonctionnels CF reçus.

En outre, au cours d'un troisième chargement A16, le dispositif de configuration 2 charge (écrit) les données d'utilisateur, extraites en A10 de la deuxième zone mémoire Z12 du dispositif électronique de référence 20, dans la deuxième zone mémoire Z22 du dispositif électronique fonctionnel 30.

Pour ce faire, le dispositif de configuration 2 envoie (A16) les données d'utilisateur DT (DT1-DT6) que le dispositif électronique fonctionnel 30 reçoit en C16 **(****figure 3****).** Le dispositif de configuration 2 envoie (A16) par exemple au dispositif électronique fonctionnel 30 une commande d'écriture spécifiant les données d'utilisateur DT à écrire dans la mémoire MR2.

Le dispositif électronique fonctionnel 30 enregistre (C18) ainsi les données d'utilisateur DT reçues dans sa deuxième zone mémoire Z22. Ces données ainsi enregistrées constitue une image (ou copie) des données DT générées et stockées (B8) préalablement dans la deuxième zone mémoire Z12 du dispositif électronique de référence 20. Dans ce mode de réalisation particulier, le processeur 32 du dispositif électronique fonctionnel 30 exécute par exemple le code d'instructions fonctionnel F3 qui définit une fonction de chargement pour charger les données d'utilisateur DT dans la mémoire du dispositif électronique fonctionnel 30 (dans la zone mémoire Z22 dans cet exemple).

A noter que, lors du troisième chargement A16, les données d'utilisateur DT sont enregistrées dans la deuxième zone mémoire Z22 du dispositif électronique fonctionnel 30, sans que ce dernier n'interprète ces données d'utilisateur DT. Autrement dit, il s'agit uniquement d'une copie, depuis le dispositif de configuration 2 vers la mémoire MR2 du dispositif électronique fonctionnel 30, sans création notamment de répertoire ou de fichier par exemple. Ce chargement peut se faire bit par bit, ou plus généralement paquet de données par paquet de données, sans qu'il y ait génération de ces données à proprement parler. En particulier, le dispositif électronique fonctionnel 30 peut copier rapidement les données d'utilisateur DT sans comprendre la structure des répertoires et fichiers.

La copie des données d'utilisateur DT depuis la deuxième zone mémoire Z12 du dispositif électronique de référence vers la deuxième zone mémoire Z22 du dispositif électronique fonctionnel est avantageuse en ce qu'elle peut être réalisée en minimisant le temps de traitement et les ressources nécessaires. Le processeur 32 du dispositif électronique fonctionnel 30 n'a pas besoin de réaliser les opérations de traitement qui ont été préalablement effectuées par le processeur 22 du dispositif électronique de référence 20 pour générer les données d'utilisateur DT.

A l'issue des chargements A12 et A16, le dispositif électronique fonctionnel 30 peut être fonctionnel ou nécessiter au moins une étape de configuration ultérieure, comme déjà décrit précédemment.

Selon un exemple particulier, suite aux chargements A12 et A16 **(****figure 3****),** le dispositif de configuration 2 réalise une phase de personnalisation (A20) du dispositif électronique fonctionnel 30. Pour ce faire, le dispositif de configuration 2 charge, dans la mémoire MR2 du dispositif électronique fonctionnel 30, des données de personnalisation propres par exemple à un utilisateur du dispositif électronique fonctionnel 30. Ces données de personnalisation peuvent comprendre par exemple des données personnelles telles que nom, prénom et/ou date de naissance de l'utilisateur, un code personnel PIN, ... Dans le cas d'une carte bancaire, par exemple, les données de personnalisation peuvent comprendre l'identifiant PAN de la carte bancaire, sa date d'expiration et éventuellement son cryptogramme CW, d'autres exemples étant toutefois possibles.

L'invention permet de configurer de manière efficace un ou des dispositifs électroniques, à partir de données d'utilisateur générées au préalable par un dispositif électronique servant de référence, de sorte à minimiser les ressources de traitement nécessaire et les temps de configuration.

En outre, l'invention permet d'optimiser l'utilisation de la mémoire aussi bien dans le dispositif électronique de référence que dans le dispositif électronique fonctionnel. Une utilisation sélective des codes d'instructions est réalisée de sorte que seuls les codes d'instructions utiles (ou nécessaires) à la préparation du dispositif électronique de référence sont chargées dans ce dernier. De même, seuls les codes d'instructions utiles (ou nécessaires) à la configuration ou pré-personnalisation du dispositif électronique fonctionnel sont chargés dans ce dernier.

Ainsi, au cours d'un premier chargement, seuls les codes d'instructions de production sont chargés en mémoire dans le dispositif électronique de référence, à l'exclusion de tous codes d'instructions fonctionnels ne correspondant pas également à des codes d'instructions de production. De même, au cours d'un deuxième chargement, seuls les codes d'instructions fonctionnels sont chargés en mémoire dans le dispositif électronique fonctionnel, à l'exclusion de tous codes d'instructions de production ne correspondant pas également à des codes d'instructions fonctionnels. Les codes d'instructions de production n'ayant pas d'utilité pour configurer le dispositif électronique fonctionnel sont donc ignorés lors de ce deuxième chargement.

Il est ainsi possible d'utiliser des mémoires plus petites ou de libérer de l'espace mémoire dans le dispositif électronique de référence et dans le dispositif électronique fonctionnel.

La présente invention peut s'appliquer à tous dispositifs électroniques nécessitant une configuration avant de passer en mode fonctionnel.

Un procédé de configuration conforme à un mode de réalisation particulier de l'invention est à présent décrit en référence à la **figure 5****.** Plus précisément, le dispositif de configuration 2, décrit ci-avant en référence aux **figures 1-2****,** met en œuvre un procédé de configuration en exécutant le programme d'ordinateur PG1, selon un mode de réalisation particulier.

On suppose en premier lieu que le dispositif de configuration 2 acquiert (A2) un ensemble - noté CD - de codes d'instructions comprenant des codes d'instructions de production CP et des codes d'instructions fonctionnel CF, comme déjà décrit ci-avant en référence à la **figure 3** notamment.

Le dispositif de configuration 2 réalise ensuite une étape A30 d'analyse dudit ensemble CD de codes d'instructions pour sélectionner (ou identifier) :
- une première partie de cet ensemble CD en tant que codes d'instructions de production CP ; et
- une deuxième partie de cet ensemble CD en tant que codes d'instructions fonctionnels CF ;
ces première et deuxième parties ayant au moins une portion distincte, comme déjà expliqué.

Cette analyse A30 permet de différencier les données d'instructions de production CP des codes d'instructions fonctionnels CF. Cette analyse A30 peut être réalisée automatiquement dès lors que l'on sait repérer automatiquement les codes d'instructions qui sont utiles ou nécessaires pour configurer le dispositif électronique de référence 20 et ceux utiles ou nécessaires pour configurer le dispositif électronique fonctionnel 30. Pour ce faire, le dispositif de configuration 2 consulte par exemple une base de données dans laquelle il est indiqué, pour chaque code d'instructions, si celui-ci intervient dans la configuration du dispositif électronique de référence 20 et s'il intervient dans la configuration du dispositif électronique fonctionnel 30.

Selon un exemple particulier, l'analyse A30 comprend une analyse de couverture de code au cours de laquelle le dispositif de configuration 2 analyse un ou des dispositifs électroniques de test pour déterminer quels codes d'instructions sont invoqués (exécutés) lors de la configuration du dispositif électronique de référence 20 et quels codes d'instructions sont invoqués (exécutés) lors de la configuration du dispositif électronique fonctionnel 30.

Une fois que les codes d'instructions de production CP et les codes d'instructions fonctionnels CF ont été identifiés dans l'ensemble CD, le dispositif de configuration 2 réalise l'étape A4 de sorte que le procédé de configuration se poursuive comme déjà décrit précédemment en référence aux **figures 3-4****.**

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de configuration mis en œuvre par un dispositif de configuration (2) comprenant :
- acquisition (A2) d'un ensemble de codes d'instructions comprenant :
∘ des codes d'instructions de production (CP) pour configurer un dispositif électronique de référence (20) ; et
∘ des codes d'instructions fonctionnels (CF) pour configurer un dispositif électronique fonctionnel (30) ;
dans lequel les codes d'instructions de production (CP) et les codes d'instructions fonctionnels (CF) sont au moins en partie distincts les uns des autres ;
- premier chargement (A4) au cours duquel les codes d'instructions de production sont chargés dans une première zone mémoire (Z11) du dispositif électronique de référence, sans charger aucun code d'instructions fonctionnel ne faisant pas également partie des codes d'instructions de production, de sorte à causer l'exécution par le dispositif électronique de référence des codes d'instructions de production pour générer des données d'utilisateur (DT) dans une deuxième zone mémoire (Z12) du dispositif électronique de référence ;
- extraction (A10) des données d'utilisateur (DT) depuis la deuxième zone mémoire (Z12) du dispositif électronique de référence ;
- deuxième chargement (A12) au cours duquel les codes d'instructions fonctionnels (CF) sont chargés dans une première zone mémoire (Z21) du dispositif électronique fonctionnel, sans charger aucun code d'instructions de production ne faisant pas également partie des codes d'instructions fonctionnels ; et
- troisième chargement (A16) au cours duquel les données d'utilisateur, extraites de la deuxième zone mémoire du dispositif électronique de référence, sont chargées dans une deuxième zone mémoire du dispositif électronique fonctionnel.

2. Procédé selon la revendication 1, le procédé comprenant une analyse (A30) dudit ensemble (CD) de codes d'instructions pour sélectionner :
- une première partie dudit ensemble en tant que codes d'instructions de production (CP) ; et
- une deuxième partie dudit ensemble en tant que codes d'instructions fonctionnels (CF) ;
les première et deuxième partie ayant au moins une portion distincte.

3. Procédé selon l'une quelconque des revendications 1 à 2, dans lequel les codes d'instructions de production (CP) chargés lors dudit premier chargement dans la première zone mémoire (Z11) du dispositif électronique de référence définissent au moins une fonction de configuration (F4) causant la génération des données d'utilisateur dans la deuxième zone mémoire du dispositif électronique de référence.

4. Procédé selon la revendication 3, dans lequel ladite au moins une fonction de configuration (F4) cause la création, dans la deuxième zone mémoire du dispositif électronique de référence, d'une structure de répertoires et de fichiers dans laquelle sont stockées les données d'utilisateur.

5. Procédé selon l'une quelconque des revendications 1 à 4, dans lequel l'extraction (A10) des données d'utilisateur (DT) est réalisée par le dispositif de configuration en causant l'exécution d'une fonction d'extraction (F5) définie dans les codes d'instructions de production stockées dans la première zone mémoire (Z11) du dispositif électronique de référence (20).

6. Procédé selon l'une quelconque des revendications 1 à 5, dans lequel le troisième chargement (A16), des données d'utilisateur dans la deuxième zone mémoire du dispositif électronique fonctionnel, est réalisé sans que le dispositif électronique fonctionnel (30) n'interprète lesdites données d'utilisateur (DT).

7. Procédé selon l'une quelconque des revendications 1 à 6, dans lequel le dispositif électronique de référence (20) et le dispositif électronique fonctionnel (30) sont des cartes à puce.

8. Programme d'ordinateur (PG1) comportant des instructions pour l'exécution des étapes d'un procédé de configuration selon l'une quelconque des revendications 1 à 8 lorsque ledit programme est exécuté par au moins un ordinateur.

9. Support d'enregistrement (6) lisible par un ordinateur sur lequel est enregistré un programme d'ordinateur comprenant des instructions pour l'exécution des étapes d'un procédé de configuration selon l'une quelconque des revendications 1 à 8 lorsque ledit programme est exécuté par au moins un ordinateur.

10. Un dispositif de configuration (2) comprenant :
- un module d'acquisition (MD2) d'un ensemble de codes d'instructions comprenant :
∘ des codes d'instructions de production (CP) pour configurer un dispositif électronique de référence (20) ; et
∘ des codes d'instructions fonctionnels (CF) pour configurer un dispositif électronique fonctionnel (30) ;
dans lequel les codes d'instructions de production (CP) et les codes d'instructions fonctionnels (CF) sont au moins en partie distincts les uns des autres ;
- un premier module de chargement (MD4) configuré pour charger les codes d'instructions de production dans une première zone mémoire du dispositif électronique de référence, sans charger aucun code d'instructions fonctionnel ne faisant pas également partie des codes d'instructions de production, de sorte à causer l'exécution par le dispositif électronique de référence des codes d'instructions de production pour causer la génération de données d'utilisateur dans une deuxième zone mémoire du dispositif électronique ;
- un module d'extraction (MD6) pour extraire les données d'utilisateur (DUMP) depuis la deuxième zone mémoire du dispositif électronique de référence ;
- un deuxième module de chargement (MD8) pour charger les codes d'instructions fonctionnels dans une première zone mémoire du dispositif électronique fonctionnel, sans charger aucun code d'instructions de production ne faisant pas également partie des codes d'instructions fonctionnels ; et
- un troisième module de chargement (MD10) pour charger les données d'utilisateur, extraites par le module d'extraction, dans une deuxième zone mémoire du dispositif électronique fonctionnel.

11. Système comprenant un dispositif de configuration (2) selon la revendication 10, un dispositif électronique de référence (20) et un dispositif électronique fonctionnel (30), dans lequel le dispositif électronique de référence comprend au moins une mémoire (MR1) comportant les première et deuxième zones mémoires (Z11, Z12) du dispositif électronique de référence.

12. Système selon la revendication 11, dans lequel le dispositif électronique fonctionnel comprend au moins une mémoire (MR2) comportant les première et deuxième zones mémoires (Z21, Z22) du dispositif électronique fonctionnel.

## Patentansprüche

1. Konfigurationsverfahren, das von einer Konfigurationsvorrichtung (2) umgesetzt wird, umfassend:
- Erfassen (A2) einer Gesamtheit von Anweisungscodes, umfassend:
∘ Produktionsanweisungscodes (CP) zum Konfigurieren einer elektronischen Referenzvorrichtung (20), und
∘ Funktionsanweisungscodes (CF) zum Konfigurieren einer elektronischen Funktionsvorrichtung (30),
wobei sich die Produktionsanweisungscodes (CP) und die Funktionsanweisungscodes (CF) zumindest teilweise voneinander unterscheiden,
- erstes Laden (A4), während dessen die Produktionsanweisungscodes in einen ersten Speicherbereich (Z11) der elektronischen Referenzvorrichtung geladen werden, ohne einen Funktionsanweisungscode zu laden, der nicht ebenfalls Teil der Produktionsanweisungscodes ist, um das Ausführen der Produktionsanweisungscodes durch die elektronische Referenzvorrichtung zu veranlassen, um Nutzerdaten (DT) in einem zweiten Speicherbereich (Z12) der elektronischen Referenzvorrichtung zu generieren,
- Extrahieren (A10) der Nutzerdaten (DT) aus dem zweiten Speicherbereich (Z12) der elektronischen Referenzvorrichtung,
- zweites Laden (A12), während dessen die Funktionsanweisungscodes (CF) in einen ersten Speicherbereich (Z21) der elektronischen Funktionsvorrichtung geladen werden, ohne einen Produktionsanweisungscode zu laden, der nicht ebenfalls Teil der Funktionsanweisungscodes ist, und
- drittes Laden (A16), während dessen die aus dem zweiten Speicherbereich der elektronischen Referenzvorrichtung extrahierten Nutzerdaten in einen zweiten Speicherbereich der elektronischen Funktionsvorrichtung geladen werden.

2. Verfahren nach Anspruch 1, wobei das Verfahren eine Analyse (A30) der Gesamtheit (CD) von Anweisungscodes umfasst, um auszuwählen:
- einen ersten Teil der Gesamtheit als Produktionsanweisungscodes (CP), und
- einen zweiten Teil der Gesamtheit als Funktionsanweisungscodes (CF),
wobei der erste und zweite Teil mindestens einen unterschiedlichen Abschnitt aufweisen.

3. Verfahren nach einem der Ansprüche 1 bis 2, wobei die während des ersten Ladens in den ersten Speicherbereich (Z11) der elektronischen Referenzvorrichtung geladenen Produktionsanweisungscodes (CP) mindestens eine Konfigurationsfunktion (F4) definieren, welche das Generieren der Nutzerdaten in dem zweiten Speicherbereich der elektronischen Referenzvorrichtung veranlasst.

4. Verfahren nach Anspruch 3, wobei die mindestens eine Konfigurationsfunktion (F4) die Erzeugung einer Struktur von Verzeichnissen und Dateien, worin die Nutzerdaten gespeichert sind, in dem zweiten Speicherbereich der elektronischen Referenzvorrichtung veranlasst.

5. Verfahren nach einem der Ansprüche 1 bis 4, wobei das Extrahieren (A10) der Nutzerdaten (DT) von der Konfigurationsvorrichtung verwirklicht wird, indem das Ausführen einer Extraktionsfunktion (F5) veranlasst wird, die in den Produktionsanweisungscodes definiert ist, die in dem ersten Speicherbereich (Z11) der elektronischen Referenzvorrichtung (20) gespeichert sind.

6. Verfahren nach einem der Ansprüche 1 bis 5, wobei das dritte Laden (A16) der Nutzerdaten in den zweiten Speicherbereich der elektronischen Funktionsvorrichtung verwirklicht wird, ohne dass die elektronische Funktionsvorrichtung (30) die Nutzerdaten (DT) interpretiert.

7. Verfahren nach einem der Ansprüche 1 bis 6, wobei die elektronische Referenzvorrichtung (20) und die elektronische Funktionsvorrichtung (30) Chipkarten sind.

8. Computerprogramm (PG1), umfassend Anweisungen für das Ausführen von Schritten eines Konfigurationsverfahrens nach einem der Ansprüche 1 bis 8, während das Programm von mindestens einem Computer ausgeführt wird.

9. Speichermedium (6), das von einem Computer gelesen werden kann und auf dem ein Computerprogramm, umfassend Anweisungen zum Ausführen der Schritte eines Konfigurationsverfahrens nach einem der Ansprüche 1 bis 8 während des Ausführens des Programms durch mindestens einen Computer, gespeichert ist.

10. Konfigurationsvorrichtung (2), umfassend:
- ein Erfassungsmodul (MD2) einer Gesamtheit von Anweisungscodes, umfassend:
∘ Produktionsanweisungscodes (CP) zum Konfigurieren einer elektronischen Referenzvorrichtung (20), und
∘ Funktionsanweisungscodes (CF) zum Konfigurieren einer elektronischen Funktionsvorrichtung (30),
wobei sich die Produktionsanweisungscodes (CP) und die Funktionsanweisungscodes (CF) zumindest teilweise voneinander unterscheiden,
- ein erstes Lademodul (MD4), das dazu konfiguriert ist, die Produktionsanweisungscodes in einen ersten Speicherbereich der elektronischen Referenzvorrichtung zu laden, ohne einen Funktionsanweisungscode zu laden, der nicht ebenfalls Teil der Produktionsanweisungscodes ist, um das Ausführen der Produktionsanweisungscodes durch die elektronische Referenzvorrichtung zu veranlassen, um das Generieren von Nutzerdaten in einem zweiten Speicherbereich der elektronischen Vorrichtung zu veranlassen,
- ein Extraktionsmodul (MD6) zum Extrahieren der Nutzerdaten (DUMP) aus dem zweiten Speicherbereich der elektronischen Referenzvorrichtung,
- ein zweites Lademodul (MD8) zum Laden der Funktionsanweisungscodes in einen ersten Speicherbereich der elektronischen Funktionsvorrichtung, ohne einen Produktionsanweisungscode zu laden, der nicht ebenfalls Teil der Funktionsanweisungscodes ist, und
- ein drittes Lademodul (MD10) zum Laden der durch das Extraktionsmodul extrahierten Nutzerdaten in einen zweiten Speicherbereich der elektronischen Funktionsvorrichtung.

11. System, umfassend eine Konfigurationsvorrichtung (2) nach Anspruch 10, eine elektronische Referenzvorrichtung (20) und eine elektronische Funktionsvorrichtung (30), wobei die elektronische Referenzvorrichtung mindestens einen Speicher (MR1) umfasst, der den ersten und zweiten Speicherbereich (Z11, Z12) der elektronischen Referenzvorrichtung beinhaltet.

12. System nach Anspruch 11,
wobei die elektronische Funktionsvorrichtung mindestens einen Speicher (MR2) umfasst, der den ersten und zweiten Speicherbereich (Z21, Z22) der elektronischen Funktionsvorrichtung beinhaltet.

## Claims

1. A configuration method implemented by a configuration device (2) comprising:
- acquisition (A2) of a set of instruction codes comprising:
∘ production instruction codes (CP) for configuring a reference electronic device (20); and
∘ functional instruction codes (CF) for configuring a functional electronic device (30);
wherein the production instruction codes (CP) and the functional instruction codes (CF) are at least partly separate from one another;
- first loading (A4) during which the production instruction codes are loaded into a first memory area (Z11) of the reference electronic device, without loading any functional instruction code not also part of the production instruction codes, such as to cause the execution by the reference electronic device of the production instruction codes to generate user data (DT) in a second memory area (Z12) of the reference electronic device;
- extraction (A10) of the user data (DT) from the second memory area (Z12) of the reference electronic device;
- second loading (A12) during which the functional instruction codes (CF) are loaded into a first memory area (Z21) of the functional electronic device, without loading any production instruction codes not also part of the functional instruction codes; and
- third loading (A16) during which the user data, extracted from the second memory area of the reference electronic device, are loaded into a second memory area of the functional electronic device.

2. The method as claimed in claim 1, the method comprising an analysis (A30) of said set (CD) of instruction codes for selecting:
- a first part of said set as production instruction codes (CP); and
- a second part of said set as functional instruction codes (CF); the first and second parts having at least one separate portion.

3. The method as claimed in any of claims 1 to 2, wherein the production instruction codes (CP) loaded during said first loading into the first memory area (Z11) of the reference electronic device define at least one configuration function (F4) causing the generation of the user data in the second memory area of the reference electronic device.

4. The method as claimed in claim 3, wherein said at least one configuration function (F4) causes the creation, in the second memory area of the reference electronic device, of a structure of directory and files in which the user data are stored.

5. The method as claimed in any of claims 1 to 4, wherein the extraction (A10) of the user data (DT) is carried out by the configuration device by causing the execution of an extraction function (F5) defined in the production instruction codes stored in the first memory area (Z11) of the reference electronic device (20).

6. The method as claimed in any of claims 1 to 5, wherein the third loading (A16), of the user data into the second memory area of the functional electronic device, is performed without the functional electronic device (30) interpreting said user data (DT).

7. The method as claimed in any of claims 1 to 6, wherein the reference electronic device (20) and the functional electronic device (30) are chip cards.

8. A computer program (PG1) including instructions for executing the steps of a configuration method as claimed in any of claims 1 to 8, when said program is executed by at least one computer.

9. A recording medium (6) readable by a computer on which is recorded a computer program comprising instructions for executing the steps of a configuration method as claimed in any of claims 1 to 8 when said program is executed by at least one computer.

10. A configuration device (2) comprising:
- a module (MD2) for acquiring a set of instruction codes comprising:
∘ production instruction codes (CP) for configuring a reference electronic device (20); and
∘ functional instruction codes (CF) for configuring a functional electronic device (30);
wherein the production instruction codes (CP) and the functional instruction codes (CF) are at least partly separate from one another;
- a first loading module (MD4) configured to load the production instruction codes into a first memory area of the reference electronic device, without loading any functional instruction code not also part of the production instruction codes, such as to cause the execution by the reference electronic device of the production instruction codes to generate user data in a second memory area of the reference electronic device;
- an extraction module (MD6) for extracting the user data (DUMP) from the second memory area of the reference electronic device;
- a second loading module (MD8) for loading the functional instruction codes into a first memory area of the functional electronic device, without loading any production instruction codes not also part of the functional instruction codes; and
- a third loading module (MD10) for loading the user data, extracted by the extraction module, into a second memory area of the functional electronic device.

11. A system comprising a configuration device (2) as claimed in claim 10,
a reference electronic device (20) and a functional electronic device (30), wherein the reference electronic device comprises at least one memory (MR1) including the first and second memory areas (Z11, Z12) of the reference electronic device.

12. A system as claimed in claim 11, wherein the functional electronic device comprises at least one memory (MR2) including the first and second memory areas (Z21, Z22) of the functional electronic device.
